# EUROPÄISCHE PATENTSCHRIFT

(11) **EP 1 514 623 B1**
(45) Veröffentlichungstag und Bekanntmachung des Hinweises auf die Patenterteilung: **25.04.2012**
(21) Anmeldenummer: 04021420.7
(22) Anmeldetag: 09.09.2004
(51) Int. Cl.: B23B 29/20

(54) **Werkzeugmaschine und hierzu vorgesehener Werkzeugträger**
Machine-tool and tool holder therefor
Machine-outil et porte-outil associé

(30) Priorität: 11.09.2003 DE 10343327
(43) Veröffentlichungstag der Anmeldung: 16.03.2005
(73) Patentinhaber: Index-Werke GmbH & Co. KG Hahn & Tessky, 73730 Esslingen (DE)
(72) Erfinder: Grossmann, Walter, 73240 Wendlingen (DE); Gumhold, Günther, 73061 Ebersbach (DE)
(74) Vertreter: Hoeger, Stellrecht & Partner Patentanwälte

(56) Entgegenhaltungen:
- EP-A- 0 175 902
- EP-A- 0 780 179
- DE-A1- 3 130 484
- DE-A1- 19 940 330

## Beschreibung

Die Erfindung betrifft eine Werkzeugmaschine umfassend einen Werkzeugträger mit mindestens einer Werkzeugstation, welche eine Auflageseite für eine Anlageseite eines Werkzeughalters und eine Aufnahme für einen Schaft des Werkzeughalters aufweist, wobei die Anlageseite dann gegen die Auflageseite anliegt, wenn der Werkzeughalter mit seinem Schaft in der Aufnahme eingespannt ist, und mindestens ein Formschlußelement, welches bei in der Aufnahme eingespanntem Schaft spielfrei in ein zweites Formschlußelement am Werkzeughalter eingreift, um den Werkzeughalterkörper relativ zum Werkzeugträger präzise ausgerichtet zu fixieren.

Darüber hinaus betrifft die Erfindung einen Werkzeughalter für eine Werkzeugmaschine, umfassend einen das Werkzeug tragenden Werkzeughalterkörper, welcher eine Anlageseite aufweist und einen von dieser abstehenden Schaft zum Einspannen des Werkzeughalters in einer Werkzeugstation eines Werkzeugträgers trägt, und ein zweites Formschlußelement, welches bei in der Aufnahme eingespanntem Schaft spielfrei in ein erstes Formschlußelement des Werkzeugträgers eingreift, um den Werkzeughalterkörper relativ zum Werkzeugträger präzise ausgerichtet zu fixieren.

Eine derartige Werkzeugmaschine und ein derartiger Werkzeughalter sind beispielsweise aus der EP 0 780 179 A1 bekannt.

Es werden jedoch stets höhere Anforderungen an die Präzision der Ausrichtung des Werkzeughalters und die Momentenstabilität der Ausrichtung gestellt.

Der Erfindung liegt daher die Aufgabe zugrunde, eine Werkzeugmaschine und einen hierzu geeigneten Werkzeughalter zur Verfügung zu stellen, bei welchen der Werkzeughalter mit größtmöglicher geometrischer Genauigkeit und mit möglichst großer Momentenstabilität an der Werkzeugmaschine fixierbar ist.

Diese Aufgabe ist durch die Merkmale der Ansprüche 1 und 15 gelöst.

Der Vorteil dieser Lösung ist darin zu sehen, daß durch die Anordnung zweier derart bezüglich der Aufnahme einander gegenüberliegend angeordneter Formschlußelemente und noch die Anordnung dieser Formschlußelemente in einander gegenüberliegenden Außenbereichen der Auflageseite eine hohe Momentenstabilität bei der Abstützung des Werkzeughalters an der Werkzeugmaschine zusätzlich zu einer hohen Präzision der Ausrichtung erreicht wird.

Hinsichtlich der Anordnung der Formschlußelemente in den Außenbereichen der Auflagefläche sind die unterschiedlichsten Lösungen denkbar. Beispielsweise könnten die Außenbereiche die an die jeweils nächste Auflageseite angrenzenden Außenbereiche sein.

Besonders günstig ist es jedoch, wenn die ersten Formschlußelemente in sich an Stirnseiten des Werkzeugträgers anschließenden Außenbereichen der Auflageseite angeordnet sind, da sich damit eine besonders gute Abstützung des Werkzeughalters erreichen läßt.

Eine besonders hohe Momentensteifigkeit der Verbindung zwischen Werkzeughalter und Werkzeugmaschine, insbesondere gegen eine Drehbewegung um den Schaft, ist dann erreichbar, wenn die ersten Formschlußelemente mindestens in einander gegenüberliegenden Eckbereichen der Auflageseiten angeordnet sind, da damit eine große Abstützlänge zur Verfügung steht.

Eine günstige Abstützlänge läßt sich auch dann erreichen, wenn die Formschlußelemente mindestens in Endbereichen mindestens einer Diagonalen der Auflageseite angeordnet sind.

Eine besonders präzise Ausrichtung des Werkzeughalters läßt sich dann erreichen, wenn die ersten Formschlußelemente symmetrisch zur Aufnahme angeordnet sind, so daß bei in der Aufnahme eingespannten Schaft und Belastung des Werkzeughalters die Formschlußelemente symmetrisch belastet werden.

Insbesondere ist es dabei günstig, wenn die ersten Formschlußelemente in Endbereichen beider Diagonalen der Auflageseite angeordnet sind.

Hinsichtlich der Ausbildung der ersten Formschlußelemente selbst wurden bislang keine näheren Angaben gemacht.

Wenn die Formschlußelemente insgesamt so ausgebildet sind, daß sie eine exakte Positionierung in zwei quer zueinander verlaufenden Positionierrichtungen vermitteln, dann könnte dies jedoch im Zusammenhang mit dem Einspannen des Schaftes in der Aufnahme zu Zwangszuständen führen.

Aus diesem Grund ist vorgesehen, daß die ersten Formschlußelemente eine nur in einer ersten Positionierrichtung die zweiten Formschlußelemente präzise positionierende Formschlußgeometrie aufweisen. Durch diese Reduzierung der präzisen Positionierung auf eine erste Positionierrichtung können aus Überbestimmungen resultierende Ungenauigkeiten der Positionierung vermieden werden.

Besonders zweckmäßig ist es, wenn die erste Positionierrichtung quer zu einer auf den Schaft beim Einspannen in die Aufnahme wirkenden Querkraft verläuft. Damit ist sichergestellt, daß die durch die Positionierrichtung vorgegebene präzise Positionierung unabhängig von den Wirkungen der beim Einspannen des Schafts in die Aufnahme auftretenden Querkraft ist.

Erfindungsgemäß sind die ersten Formschlußelemente sogar so ausgebildet, daß sie eine in einer quer zur ersten verlaufenden zweiten Positionierrichtung die zweiten Formschlußelemente mit einem Freiheitsgrad verschieblich führende Formschlußgeometrie aufweisen. Mit einer derartigen, ausdrücklich einen Freiheitsgrad zulassenden Formschlußgeometrie lassen sich durch eine derartige geometrische Überbestimmung bedingte Ungenauigkeiten vermeiden.

Beispielsweise wäre es denkbar, daß die zweite Positionierrichtung in einem Winkel zur Querkraft verläuft.

Besonders vorteilhaft lassen sich jedoch negative Auswirkungen der Querkraft vermeiden, wenn die zweite Positionierrichtung ungefähr parallel zu einer auf den Schaft beim Einspannen in die Aufnahme wirkenden Querkraft verläuft, da dann die durch die Querkraft bedingten Verschiebungen exakt in der Richtung verlaufen, in denen die Formschlußelemente einen Freiheitsgrad vorsehen und somit die in der ersten Positionierrichtung präzise Positionierung nicht beeinträchtigt wird.

Eine zweckmäßig realisierbare Ausführungsform sieht vor, daß die ersten Formschlußelemente sich in einer Längsrichtung erstrecken und in einer Ebene senkrecht zur Längsrichtung eine konstante Querschnittsform aufweisen. Mit einer derartigen Ausbildung läßt sich in besonders einfacher Weise der Freiheitsgrad in Richtung der zweiten Positionierrichtung schaffen.

Hinsichtlich der Art der Querschnittsform der Formschlußelemente sind die unterschiedlichsten Lösungen denkbar.

Eine besonders einfache und jedoch hinsichtlich der Positioniergenauigkeit günstige Lösung sieht vor, daß die Querschnittsform der ersten Formschlußelemente zumindest zum Teil durch schräg zueinander verlaufende, beispielsweise V-ähnlich verlaufende Flanken gebildet ist.

Eine besonders günstige Ausrichtung der sich in Längsrichtung erstreckenden Formschlußelemente ergibt sich dann, wenn die ersten Formschlußelemente sich mit ihrer Längsrichtung ungefähr parallel zu einer auf den Schaft beim Einspannen in die Aufnahme wirkenden Querkraft erstrecken.

Hinsichtlich der Anordnung der ersten Formschlußelemente am Werkzeugträger wurden bislang keine näheren Angaben gemacht.

Beispielsweise wäre es denkbar, die ersten Formschlußelemente an dem Werkzeugträger dadurch anzuordnen, daß an diesem zusätzliche, die ersten Formschlußelemente tragende Formschlußkörper angeordnet sind, die ihrerseits beispielsweise relativ zum Werkzeugträger noch positionierbar sind.

Aus Gründen einer einfachen Herstellbarkeit und möglichst großen durch die ersten Formschlußelemente vermittelnden Präzision der Ausrichtung des Werkzeughalters relativ zum Werkzeugträger ist vorgesehen, daß die ersten Formschlußelemente starr am Werkzeugträger angeordnet sind.

Erfindungsgemäß sind dabei die ersten Formschlußelemente an die Auflageseite des Werkzeugträgers angeformt.

Die konstruktive Lösung sieht vor, daß die ersten Formschlußelemente als Vertiefungen in die Auflageseite des Werkzeugträgers eingeformt sind, so daß sich diese beispielsweise durch eine spanabhebende Bearbeitung, beispielsweise durch Schleifen herstellen lassen.

Ferner sind die Formschlußelemente vorzugsweise so ausgebildet, daß sie beim Einsetzen des Schafts des Werkzeughalters in die Aufnahme in einer Einsetzrichtung in Eingriff bringbar sind, so daß keine zusätzlichen Maßnahmen erforderlich sind, um beim Aufsetzen des Werkzeughalters auf den Werkzeugträger die Formschlußelemente in Eingriff zu bringen. Vielmehr werden zwangsläufig beim Aufsetzen des Werkzeughalters auf den Werkzeugträger und Einspannen des Schafts in die Aufnahme die Formschlußelemente in Eingriff gebracht.

Hinsichtlich der Ausbildung der ersten und zweiten Formschlußelemente wurden bislang keine näheren Angaben gemacht.

So sieht eine besonders einfach herstellbare und eine gute Präzision vermittelnde Lösung vor, daß die einen der Formschlußelemente als V-förmige Verzahnung und die anderen der Formschlußelemente als die Verzahnung aufnehmende V-Nut ausgebildet ist.

Um die Flächenpressung im Bereich der Formschlußelemente möglichst gering zu halten, ist vorzugsweise vorgesehen, daß die einen der Formschlußelemente als Mehrfachverzahnung und die anderen Formschlußelemente als Mehrfachnut ausgebildet sind.

Im Zusammenhang mit der Anordnung der Auflageseite am Werkzeugträger, insbesondere wenn dieser einen Revolverkopf darstellt, wurden bislang keine näheren Angaben gemacht. Eine vorteilhafte Lösung sieht vor, daß die Werkzeugpositionen an einer Umfangsseite des Revolverkopfes angeordnet sind und somit auch die Auflageseiten an der Umfangsseite des Revolverkopfes liegen.

Alternativ dazu ist es aber auch denkbar, die Werkzeugpositionen in radial außenliegenden Bereichen von Stirnseiten des Revolverkopfes anzuordnen, wobei dann auch die Auflageseiten durch stirnseitige Bereiche des Revolverkopfes gebildet werden.

Die erfindungsgemäße Aufgabe wird ferner aber auch durch einen Werkzeughalter der eingangs beschriebenen Art erfindungsgemäß dadurch gelöst, daß mindestens zwei aufeinander gegenüberliegenden Seiten des Schaftes angeordnete zweite Formschlußelemente vorgesehen sind und daß die zweiten Formschlußelemente mindestens in einander gegenüberliegenden Außenbereichen der Anlageseite angeordnet sind.

Eine derartige Anordnung der zweiten Formschlußelemente schafft in gleicher Weise wie im Zusammenhang mit der Werkzeugmaschine und den ersten Formschlußelementen beschrieben, eine gute Führungspräzision in Verbindung mit hoher Momentensteifigkeit.

Besonders hoch ist die Momentensteifigkeit, wenn die zweiten Formschlußelemente mindestens in einander gegenüberliegenden Eckbereichen der Anlageseite angeordnet sind und somit eine möglichst große Abstützlänge für die Momentenstabilität zur Verfügung steht.

Die möglichst große Abstützlänge läßt sich insbesondere auch dadurch erreichen, daß die zweiten Formschlußelemente mindestens in einander gegenüberliegenden Endbereichen mindestens einer Diagonalen der Anlageseite angeordnet sind.

Besonders vorteilhaft ist es, um eine möglichst gleichmäßige und symmetrische Abstützung zu erreichen, wenn die zweiten Formschlußelemente symmetrisch zu dem Schaft angeordnet sind.

Eine besonders günstige Abstützung läßt sich dann erreichen, wenn die zweiten Formschlußelemente in Endbereichen beider Diagonalen der Anlageseite angeordnet sind.

Um aufgrund der stets erfolgenden Einspannung des Schaftes in die Aufnahme durch die Formschlußelemente bedingte überbestimmte Positionierungen des Werkzeughalters zu vermeiden, die wiederum die Präzision der Ausrichtung des Werkzeughalters relativ zum Werkzeugträger beeinträchtigen, ist vorzugsweise vorgesehen, daß die zweiten Formschlußelemente eine nur in einer ersten Positionierrichtung die ersten Formschlußelemente präzise positionierende Formschlußgeometrie aufweisen.

Durch eine derartige Formschlußgeometrie lassen sich somit mögliche Zwangszustände und somit durch diese bedingte Ungenauigkeiten vermeiden.

Besonders günstig ist es dabei, wenn die erste Positionierrichtung quer zu einer auf den Schaft beim Einspannen in die Aufnahme wirkenden Querkraft verläuft, da damit die Wirkungen der Querkraft sich nicht negativ auf die erste Positionierrichtung auswirken.

Um eine negative Beeinträchtigung der präzisen Positionierung in der ersten Positionierrichtung zu vermeiden ist es erfindungsgemäß vorgesehen, dass die zweiten Formschlußelemente eine in einer quer zur ersten verlaufenden zweiten Positionierrichtung die ersten Formschlußelemente mit einem Freiheitsgrad verschieblich führende Formschlußgeometrie aufweisen, so daß durch diesen Freiheitsgrad in der zweiten Positionierrichtung gezielt durch Überbestimmung bewirkte Reduzierungen der Präzision der Ausrichtung des Werkzeughalters relativ zum Werkzeugträger vermieden werden können.

Besonders günstig ist es, wenn die zweite Positionierrichtung ungefähr parallel zu einer auf den Schaft beim Einspannen in die Aufnahme wirkenden Querkraft verläuft, da damit die durch die Querkraft bedingten Verschiebungen genau in Richtung des von den zweiten Formschlußelementen vorgesehenen Freiheitsgrades verlaufen.

Die zweiten Formschlußelemente könnten ihrerseits beliebig ausgebildet sein. Beispielsweise könnte es sich um einzelne Elemente handeln. Eine hinsichtlich ihrer Herstellbarkeit besonders günstige Lösung sieht vor, daß die zweiten Formschlußelemente sich in einer Längsrichtung erstrecken und in einer Ebene senkrecht zur Längsrichtung eine konstante Querschnittsform aufweisen. Damit lassen sich die zweiten Formschlußelemente besonders einfach durch ein spanabhebendes Herstellungsverfahren herstellen.

Zweckmäßigerweise ist die Querschnittsform der zweiten Formschlußelemente so gewählt, daß diese zumindest zum Teil durch schräg zueinander verlaufende Flanken gebildet ist.

Eine besonders günstige Lösung sieht vor, daß sich die zweiten Formschlußelemente mit ihrer Längsrichtung ungefähr parallel zu einer auf den Schaft beim Einspannen in der Aufnahme wirkenden Querkraft erstrecken und somit die Verschiebbarkeit der Formschlußelemente in der Längsrichtung zueinander einen Ausgleich von durch die Querkraft bedingten Verschiebungen erlaubt.

Hinsichtlich der Anordnung der zweiten Formschlußelemente am Werkzeughalterkörper wurden bislang keine näheren Angaben gemacht. So sieht eine günstige Lösung vor, daß die zweiten Formschlußelemente an einer bei in der Aufnahme eingespanntem Schaft in Richtung des Werkzeugträgers kraftbeaufschlagten Stützplatte des Werkzeughalterkörpers angeordnet sind. Mit einer derartigen Stützplatte lassen sich die Formschlußelemente besonders geeignet am Werkzeughalterkörper befestigen.

Vorzugsweise ist dabei die Stützplatte auf einer dem Werkzeugträger zugewandten Seite eines den Schaft tragenden Gehäuses des Werkzeugträgers angeordnet.

Konstruktiv besonders vorteilhaft ist es, wenn die zweiten Formschlußelemente einstückig an die Stützplatte angeformt sind.

Grundsätzlich wäre es denkbar, auch beim Werkzeughalter die zweiten Formschlußelemente starr mit dem Werkzeughalterkörper zu verbinden.

Eine besonders günstige Lösung sieht jedoch vor, daß die zweiten Formschlußelemente an dem Werkzeughalterkörper justierbar angeordnet sind, um durch Voreinstellung eine exakte Ausrichtung des Werkzeugs relativ zu den zweiten Formschlußelementen erreichen zu können, während die zweiten Formschlußelemente beim Einsetzen des Werkzeughalters in den Werkzeugträger zwangsläufig exakt und präzise zu den ersten Formschlußelementen ausgerichtet sind.

Eine derartige Justierbarkeit der zweiten Formschlußelemente ließe sich beispielsweise dadurch erreichen, daß diese an an dem Werkzeughalterkörper, beispielsweise der Stützplatte, montierbaren Leisten angeordnet sind.

Besonders günstig läßt sich jedoch die Justierbarkeit der zweiten Formschlußelemente dann erreichen, wenn die Stützplatte gegenüber dem Gehäuse des Werkzeughalterkörpers justierbar und nach der Justierung fixierbar ist.

Beispielsweise läßt sich dadurch die Ausrichtung des Gehäuses des Werkzeughalterkörpers relativ zur Stützplatte voreinstellen und somit beim Einsetzen des Werkzeughalters sicherstellen, daß das im Gehäuse des Werkzeughalters gelagerte Werkzeug exakt, beispielsweise parallel, zur Spindelachse ausgerichtet ist.

Eine besonders günstige Lösung sieht vor, daß die Stützplatte und das Gehäuse relativ zueinander mittels Ausrichtelementen ausrichtbar sind. Derartige Ausrichtelemente umfassen beispielsweise einerseits Stellschrauben, welche am Gehäuse oder in der Stützplatte angeordnet sein können und andererseits ein durch die Stellschrauben einspannbares Element, zum Beispiel einen Vorsprung oder einen Stift, das an der Stützplatte oder am Gehäuse gehalten ist.

Ferner sind zum Fixieren der Stützplatte relativ zum Gehäuse Fixierelemente, zum Beispiel Fixierschrauben, vorgesehen.

Hinsichtlich der Ausbildung der Formschlußelemente selbst wurden bislang noch keine näheren Angaben gemacht. So sieht eine besonders günstige Lösung vor, daß die Formschlußelemente durch Einsetzend es Schafts des Werkzeughalters in die Aufnahme in einer Einsetzrichtung in Eingriff bringbar sind, so daß keine zusätzlichen Maßnahmen erforderlich sind, um die Formschlußelemente in Eingriff zu bringen und zu halten.

Vielmehr lassen sich durch diese Lösung die Formschlußelemente bei in die Aufnahme eingespanntem Schaft kraftbeaufschlagt in Eingriff halten, um eine besonders hohe Momentenabstützung zu gewährleisten.

Die Formschlußelemente selbst können dabei in unterschiedlichster Art und Weise ausgebildet sein. Beispielsweise ist vorgesehen, daß die einen der Formschlußelemente als V-förmige Zähne und die anderen der Formschlußelemente als die Zähne aufnehmende V-Nut ausgebildet sind.

Zur Vermeidung von hohen Flächenpressungen ist vorzugsweise vorgesehen, daß die einen der Formschlußelemente als Mehrfachverzahnung und die anderen der Formschlußelemente als Mehrfachnut ausgebildet sind.

Darüber hinaus betrifft die Erfindung noch eine Werkzeugfixiereinrichtung für Werkzeugmaschinen, umfassend einen Werkzeughalter mit einem das Werkzeug tragenden Werkzeughalterkörper, welcher eine Anlageseite aufweist und einen von dieser abstehenden Schaft zum Einspannen des Werkzeughalters trägt, einen Werkzeugträger mit einer Werkzeugstation, umfassend eine Auflageseite und eine Aufnahme für den Schaft, wobei die Anlageseite dann gegen die Auflageseite anliegt, wenn der Werkzeughalter mit seinem Schaft in der Aufnahme eingespannt ist, und mindestens eine zwischen Werkzeughalterkörper und Werkzeugträger wirksame Ausrichtvorrichtung zur Positionierung des Werkzeughalterkörpers relativ zum Werkzeugträger, die bei in der Aufnahme eingespanntem Schaft mittels am Werkzeugträger und am Werkzeughalterkörper angeordneten und spielfrei ineinandergreifenden ersten bzw. zweiten Formschlußelementen den Werkzeugträger relativ zum Werkzeughalterkörper in einer einzigen Stellung ausgerichtet fixiert. Eine derartige Werkzeugfixiereinrichtung ist aus der EP 0 780 179 A1 bekannt.

Bei einer derartigen Werkzeugfixiereinrichtung wird die eingangs genannte Aufgabe erfindungsgemäß dadurch gelöst, daß mindestens zwei auf einander gegenüberliegenden Seiten des in die Aufnahme eingespannten Schaftes angeordnete Ausrichtvorrichtungen vorgesehen sind und daß die Ausrichtvorrichtungen mindestens in einander gegenüberliegenden Außenbereichen der Auflageseite und der Anlageseite eine wirksame spielfreie Verbindung zwischen dem Werkzeugträger und dem Werkzeughalterkörper herstellen.

Besonders günstig ist die erfindungsgemäße Werkzeugfixiereinrichtung dann, wenn durch die Ausrichtvorrichtungen eine Ausrichtung des Werkzeughalters gegen eine Verdrehung um den in die Aufnahme eingesetzten Schaft bewirken. Das heißt, daß die Ausrichtvorrichtungen bei ihrer erfindungsgemäßen Anordnung selbst im Fall eines geringfügigen Spiels des in die Aufnahme eingesetzten Schaftes eine definierte Drehstellung des Werkzeughalters gegenüber dem Werkzeugträger aufrecht erhalten, so daß sich dadurch insbesondere die exakte Ausrichtung des Werkzeugs mit seiner Werkzeugachse relativ in einem bestimmten Winkel zur Spindelachse, beispielsweise exakt parallel oder exakt senkrecht zur Spindelachse, festlegen läßt, wobei eine durch das Spiel des Schaftes in der Aufnahme bedingte Parallelverschiebung die Ausrichtung der Werkzeugachse in dem bestimmten Winkel relativ zur Spindelachse nicht beeinträchtigt.

Insbesondere ist dabei vorgesehen, daß die Ausrichtvorrichtungen so ausgebildet sind, daß sie eine exakte Ausrichtung des Werkzeughalters gegenüber dem Werkzeugträger nur in einer ersten Positionierrichtung bewirken und einen Freiheitsgrad in einer quer zur ersten verlaufenden zweiten Positionierrichtung zulassen.

Damit besteht zwar die Möglichkeit, daß nicht exakt bestimmte Parallelverschiebungen des Werkzeugs in seiner Ausrichtung relativ zur Spindelachse auftreten, diese Parallelverschiebungen ändern jedoch den eingestellten Winkel zwischen einer Werkzeugachse und der Spindelachse nicht mehr.

Insbesondere ist eine derartige Lösung günstig, wenn beim Einspannen des Schaftes in der Aufnahme entstehende, quer zum Schaft wirkende Querkräfte ungefähr parallel zur zweiten Positionierrichtung verlaufen. Durch diese Querkräfte bedingte Verschiebungen des Schaftes in der Aufnahme und somit auch Verschiebungen des Werkzeugträgerkörpers relativ zum Werkzeugträger führen somit weder zu Zwangskräften in den Ausrichtvorrichtungen, die die durch diese bewirkte präzise Positionierung beeinträchtigen, noch zu einer Veränderung des Winkels zwischen einer Werkzeugachse und der Spindelachse.

Beispielsweise läßt sich bei einer derartigen Lösung noch eine exakte Positionierung in der zweiten Positionierrichtung dadurch erreichen, daß die durch die Querkräfte erreichte Anschlagstellung des Schaftes in der Aufnahme die exakte Position in der zweiten Positionierrichtung definiert.

Hinsichtlich der Anordnung der Ausrichteinrichtungen wurden bislang keine weiteren spezifischen Angaben gemacht. So ist vorzugsweise vorgesehen, daß die Ausrichteinrichtungen mindestens in einander gegenüberliegenden Eckbereichen der Anlagefläche und/oder Auflagefläche angeordnet sind.

Mit dieser Anordnung der Ausrichteinrichtungen läßt sich eine besonders große Abstützlänge und somit eine hohe Momentensteifigkeit der Verbindung zwischen dem Werkzeughalter und dem Werkzeugträger erreichen.

Dies läßt sich auch dadurch erreichen, daß die Ausrichteinrichtungen mindestens in einander gegenüberliegenden Endbereichen mindestens einer Diagonale der Auflageseite und/oder Anlageseite angeordnet sind.

Im übrigen ist die Werkzeugfixiereinrichtung vorzugsweise mit denselben Merkmalen versehen, die im Zusammenhang mit der erfindungsgemäßen Werkzeugmaschine und dem erfindungsgemäßen Werkzeughalter voranstehend beschrieben wurden.

Weitere Merkmale und Vorteile der Erfindung sind Gegenstand der nachfolgenden Beschreibung sowie der zeichnerischen Darstellung eines Ausführungsbeispiels.

In der Zeichnung zeigen:
- Fig. 1: eine Draufsicht auf Werkstückspindel und Werkzeugträger einer Werkzeugmaschine;
- Fig. 2: eine perspektivische Darstellung eines erfindungsgemäß an einem Werkzeugträger fixierten Werkzeughalters;
- Fig. 3: einen Schnitt längs Linie 3-3 in Fig. 2;
- Fig. 4: einen Schnitt längs Linie 4-4 in Fig. 3;
- Fig. 5: eine Draufsicht auf eine Auflageseite des Werkzeugträgers mit geschnitten dargestelltem Schaft;
- Fig. 6: eine Draufsicht auf eine Anlageseite des Werkzeughalters mit geschnitten dargestelltem Schaft;
- Fig. 7: eine vergrößerte Darstellung des Bereichs A in Fig. 3 bei von der Auflageseite abgehobener Anlageseite und
- Fig. 8: eine Ansicht in Richtung des Pfeils B in Fig. 1.

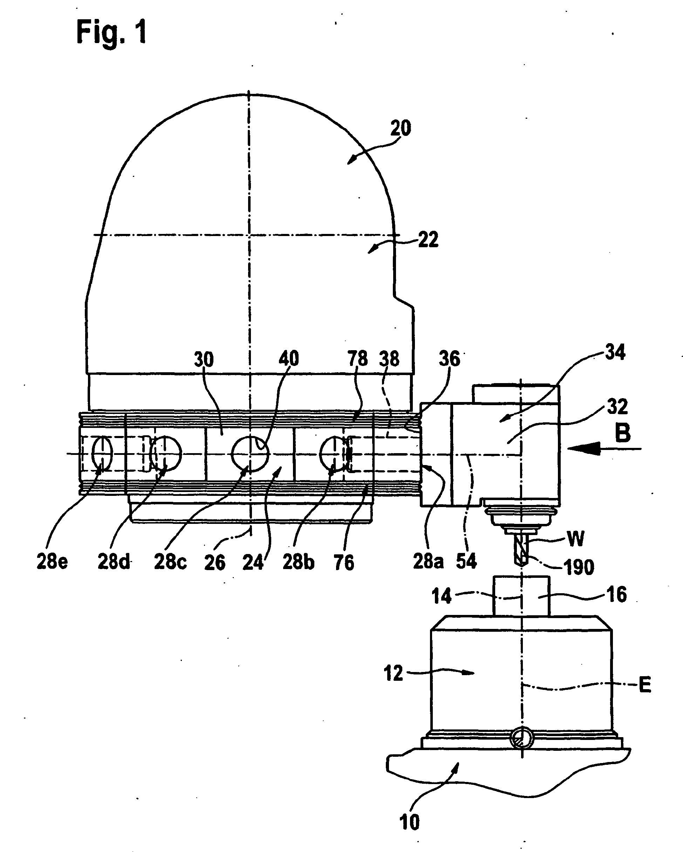

Eine Drehmaschine, bei welcher eine erfindungsgemäße Werkzeugfixiereinrichtung einsetzbar ist, umfaßt, wie in Fig. 1 dargestellt, eine in einem Spindelgehäuse 10 gelagerte Werkstückspindel 12, welche in dem Spindelgehäuse 10 um eine Spindelachse 14 drehbar gelagert und drehend antreibbar ist.

In der Werkstückspindel 12 ist ein als Ganzes mit 16 bezeichnetes Werkstück fixierbar und um die Spindelachse 14 zur Bearbeitung desselben drehbar.

Die Bearbeitung des Werkstücks 16 erfolgt durch ein Werkzeug W, in Fig. 1 beispielsweise als Bohrer dargestellt, welches durch einen als Ganzes mit 20 bezeichneten Werkzeugträger relativ zur Spindelachse 14 bewegbar und positionierbar ist.

Der Werkzeugträger 20 ist beispielsweise als Revolver ausgebildet und umfaßt ein Revolvergehäuse 22, an welchem ein Revolverkopf 24 um eine Revolverachse 26 drehbar gelagert ist.

Der Revolverkopf 24 ist dabei mit einer Vielzahl von Werkzeugstationen 28 versehen, wobei jede der Werkzeugstationen 28 eine Auflageseite 30 aufweist, auf welche ein Werkzeughalterkörper 32 eines als Ganzes mit 34 bezeichneten Werkzeughalters mit einer Anlageseite 36 auflegbar ist, während ein von der Anlagefläche 36 abstehender Schaft 38 des Werkzeughalters 34 in eine für diesen vorgesehene Aufnahme 40 der Werkzeugstation 28 einsetzbar und in der Aufnahme 40 durch ein in eine Verzahnung des Schaftes 38 eingreifendes mit einer Gegenverzahnung versehenes Spannelement fixierbar ist. Die Fixierung des Schafts 38 in der Aufnahme 40 erfolgt beispielsweise entsprechend DIN 69880.

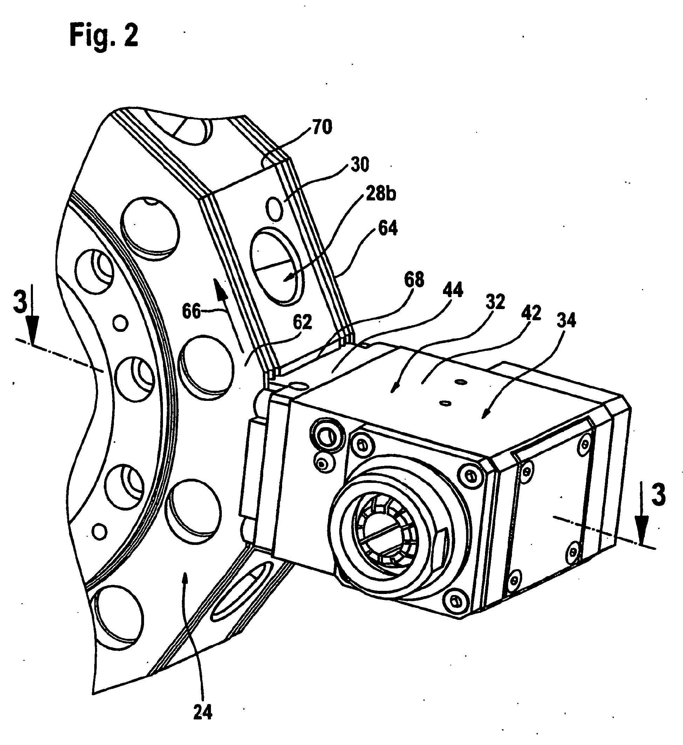

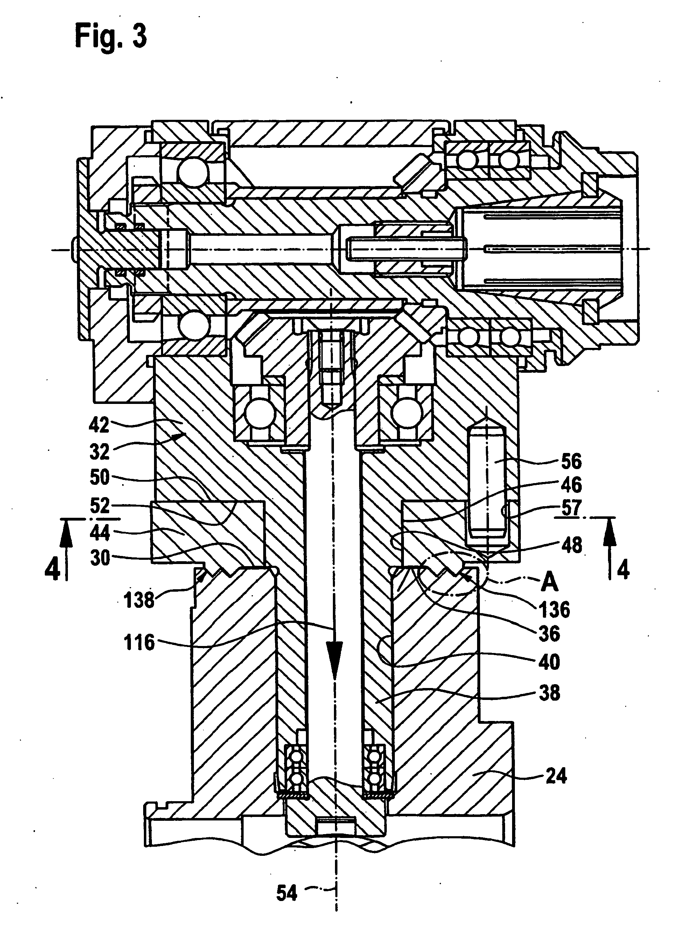

Wie in Fig. 2 und 3 dargestellt, umfaßt der Werkzeughalterkörper 32 ein Gehäuse 42, an welchem der Schaft 38 angeformt ist und eine an dem Gehäuse 42 der Auflageseite 30 zugewandt angeordnete Stützplatte 44, welche einen sich an den Schaft 38 anschließenden zylindrischen Ansatz 46 mit einer zylindrischen Innenfläche 48 umschließt und mit einer Tragfläche 50 das Gehäuse 42 trägt, welches auf dieser Tragfläche 50 mit einer Stützfläche 52 anliegt.

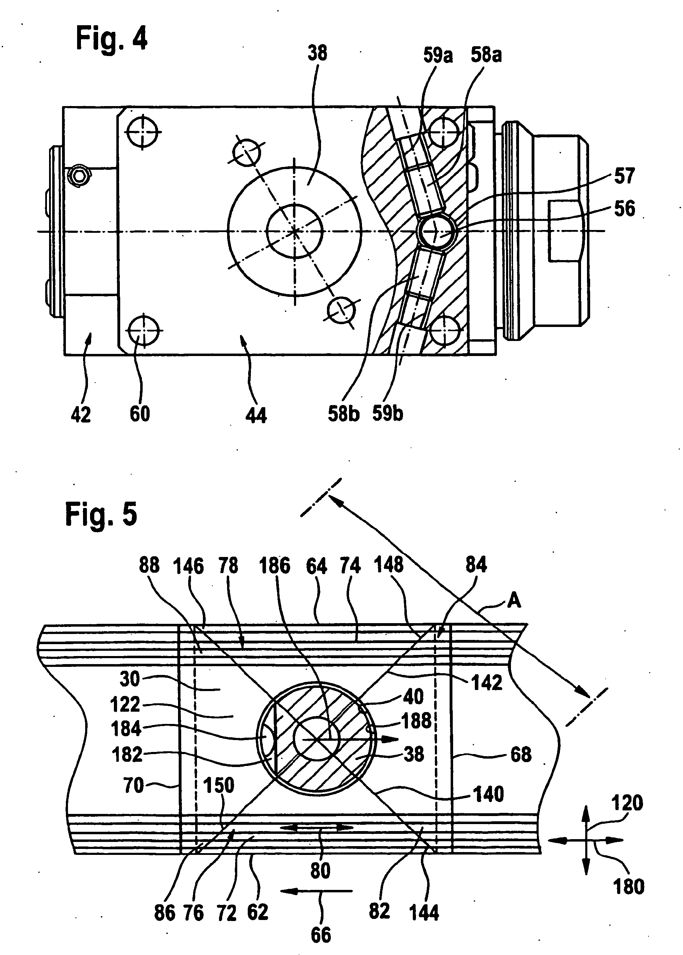

Das Gehäuse 42 und die Stützplatte 44 sind relativ zueinander um eine Achse 54 des Schaftes 38 verdrehbar, wobei der zylindrische Ansatz 46 in der zylindrischen Innenfläche 48 der Stützplatte 44 um die Achse 54 drehbar geführt ist und außerdem die Stützfläche 52 gegenüber der Tragfläche 50 gleiten kann. Ferner ist das Gehäuse 42 gegenüber der Stützplatte 44 mittels zusammenwirkenden Ausrichtelementen 56, 57 um die Achse 54 ausrichtbar, wobei ein erstes Ausrichtelement 56 (Fig. 3) als im Gehäuse 42 sitzender Stift ausgebildet ist, der sich in eine Bohrung 57 in der Stützplatte 44 mit Spiel hinein erstreckt (Fig. 4) und wobei die Ausrichtelemente 58a und 58b als Stellschrauben ausgebildet sind, die in quer zur Bohrung 57 verlaufenden Bohrungen 59a bzw. 59b sitzen und den in die Bohrung eingreifenden Stift 56 auf gegenüberliegenden Seiten beaufschlagen. Durch Verstellen der Stellschrauben 58a, b läßt sich der Stift 56 in der Bohrung 57 in Querrichtung zu dieser im Rahmen des vorhandenen Spiels verschieben und somit läßt sich die Ausrichtung des Gehäuses 42 relativ zur Stützplatte 44 bezüglich einer Drehung um die Achse 54 einstellen.

Zur Festlegung des ausgerichteten Gehäuses 42 relativ zur Stützplatte 44 sind zusätzliche Fixierelemente 60, beispielsweise Schrauben, vorgesehen.

Alternativ dazu sind das Gehäuse 42 und die Stützplatte 44 auch durch anders geartete Ausrichtelemente oder Fixierelemente fixierbar, wobei diese Elemente entweder nach Ausrichtung des Gehäuses 42 zur Stützplatte 44 einsetzbare Paßstifte oder Schrauben sein können, die das Gehäuse in seiner Ausrichtung relativ zur Stützplatte 44 durch Formschluß oder Kraftschluß festlegen.

Wie in Fig. 2 und 5 dargestellt, sind die Auflageseiten 30 der Werkzeugstationen 28 vorzugsweise als abgeflachte Umfangsflächen des scheibenförmigen Revolverkopfes 24 ausgebildet, die sich zwischen einer vorderen Stirnseite 62 und einer hinteren Stirnseite 64 des scheibenförmigen Revolverkopfes 24 in Richtung der Revolverachse 26 erstrecken und in einer Umfangsrichtung oder Azimutalrichtung 66 zur Revolverachse 26 maximal bis zu aufeinanderfolgenden Kanten 68 und 70 des mit den abgeflachten Auflageseiten 30 versehenen scheibenförmigen Revolverkopfes 24 erstrecken.

Zur exakten Fixierung des Werkzeughalters 34 ist die Auflageseite 30 des Revolverkopfes 24 in ihren an die vordere Stirnseite 62 und die hintere Stirnseite 64 angrenzenden Außenbereichen 72 und 74 mit ersten Formschlußelementen 76 und 78 versehen, die sich mit einer Längsrichtung 80 von einer Kante 68 zur anderen Kante 70 in der Azimutalrichtung oder Umfangsrichtung 66 erstrecken und somit von nahe der Kante 68 liegenden gegenüberliegenden Eckbereichen 82 und 84 zu nahe der Kante 70 liegenden gegenüberliegenden Eckbereichen 86 und 88 der Auflageseite 30 verlaufen.

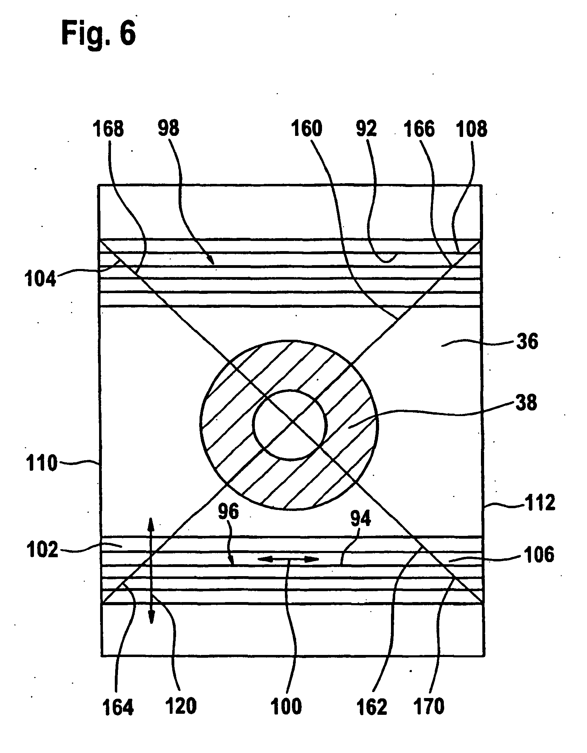

Außerdem ist, wie in Fig. 6 dargestellt, die Anlageseite 36, die sich in Richtung der Revolverachse 26 über dieselbe Distanz erstreckt wie die zwischen den Stirnseiten 62 und 64 liegende Auflageseite 30, in auf gegenüberliegenden Seiten des Schaftes 38 liegenden Außenbereichen 92 und 94 mit zweiten Formschlußelementen 96 und 98 versehen, welche sich mit ihrer Längsrichtung 100 von Eckbereichen 102 und 104 zu gegenüberliegenden Eckbereichen 106 und 108 der Anlageseite 36 erstrecken, wobei die Eckbereiche 102 und 104 nahe einer ungefähr parallel zur Revolverachse 26 liegenden Seitenkante 110 und die Eckbereiche 106 und 108 nahe einer dem Schaft 38 gegenüberliegenden und ebenfalls ungefähr parallel zur Revolverachse 36 verlaufenden Seitenkante 112 der Auflageseite 30 liegen.

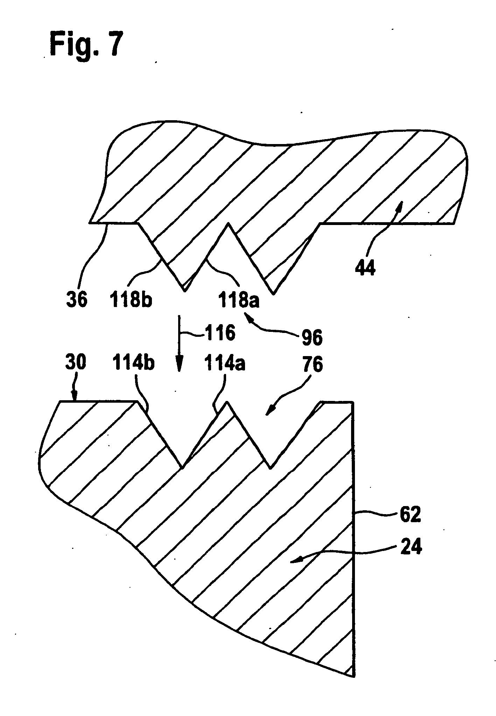

Wie in Fig. 7 exemplarisch am Beispiel der ersten Formschlußelemente 76 dargestellt, weisen die ersten Formschlußelemente 76, 78 einander zugewandt angeordnete Fixierflanken 114a, b auf, welche quer zu einer Einsetzrichtung 116 mit zunehmender Erstreckung der Fixierflanken 114a, b in der Einsetzrichtung 116 einen geringer werdenden Abstand aufweisen.

Im einfachsten Fall verlaufen die einander zugewandten Fixierflanken 114a, b der ersten Formschlußelemente 76, 78 V-förmig.

In gleicher Weise umfassen die zweiten Formschlußelemente 96, 98, exemplarisch dargestellt am Beispiel der Formschlußelemente 96 Außenflanken 118a, 118b auf, die in entgegengesetzte Richtungen weisen und quer zur Einsetzrichtung 116 mit zunehmender Erstreckung derselben in der Einsetzrichtung 116 einen geringeren Abstand voneinander aufweisen.

Im einfachsten Fall sind auch die Außenflanken 118a, b V-förmig ausgebildet.

Ferner ist die Ausrichtung der Außenflanken 118a, b relativ zueinander an die Ausrichtung der Fixierflanken 114a, b relativ zueinander angepaßt, so daß bei Bewegen der Außenflanken 118a, b in der Einsetzrichtung 116 in zwischen die Fixierflanken 114a, b hinein die Außenflanke 118a an der Fixierflanke 114a und die Außenflanke 118b an der Fixierflanke 114b zumindest linienförmig, vorzugsweise im wesentlichen flächig anliegen.

Die Fixierflanken 114a, 114b sowie die Außenflanken 118a, 118b erstrecken sich parallel zu den Längsrichtungen 80 bzw. 100 der ersten Formschlußelemente 76, 78 bzw. der zweiten Formschlußelemente 96, 98, so daß die ersten Formschlußelemente 76, 78 relativ zu den zweiten Formschlußelementen 96, 98 in Richtung der Längsrichtungen 80, 100 relativ zueinander bewegbar sind und eine exakte Positionierung lediglich in einer quer zu den Längsrichtungen 80, 100 verlaufenden ersten Positionierrichtung 120 vermitteln.

Um eine reduzierte Flächenpressung zu erhalten ist vorzugsweise vorgesehen, daß jedes der ersten Formschlußelemente 76, 78 mehr als ein Paar, vorzugsweise zwei Paare voneinander zugewandten Fixierflanken 114a, b aufweist und jedes der zweiten Formschlußelemente 96, 98 mehr als ein Paar, vorzugsweise zwei Paare von in entgegengesetzte Richtungen weisenden Außenflanken 118a, b aufweist.

Dadurch, daß auch der Schaft 38 in die Aufnahme 40 durch Bewegen in Richtung parallel zur Einsetzrichtung 116 einsetzbar ist, erfolgt mit Einsetzen des Schaftes 38 in die Aufnahme 40 und somit mit Anlegen der Anlageseite 36 der Stützplatte 44 an der Auflageseite 30 ein Ineingriffbringen der zweiten Formschlußelemente 96 und 98 mit den ersten Formschlußelementen 76 und 78, die im Bereich der Anlageseite 36 und der Auflageseite 30 angeordnet sind. Dabei erstreckt sich die Anlageseite 36 nicht zwangsläufig bis zu den Kanten 68 und 70, sondern kann im Abstand von diesen enden, wie in Fig. 5 durch die gestrichelten Linien angedeutet ist, so daß auch die Auflageseite 30 sich entsprechend der Anlageseite 36 erstreckt.

Jedes der ersten Formschlußelemente 76, 78 bildet mit dem korrespondierenden zweiten Formschlußelement 96, 98 eine Ausrichtvorrichtung 136, 138, wobei die beiden Ausrichtvorrichtungen 136, 138 durch ihre Anordnung auf gegenüberliegenden Seiten der Aufnahme 40 und ihre Erstreckung bis in die Eckbereiche 82 und 86 bzw. 84 und 88 als maximale Abstützlänge die Länge von Diagonalen 140, 140 der Auflageseite 30 aufweisen, wobei die Diagonale 140 vom Eckbereich 82 zum Eckbereich 88 der Auflageseite 30 verläuft und die Diagonale 142 vom Eckbereich 84 zum Eckbereich 86 der Auflageseite 30 verläuft und folglich Endbereiche 144 und 146 der Diagonalen 140 in den Eckbereichen 82 und 88 und Endbereiche 148 und 150 der Diagonalen 142 in den Eckbereichen 84 und 86 liegen.

Den Diagonalen 140, 142 der Auflageseite 30 entsprechen Diagonalen 160, 162 der Anlageseite 36 mit in den Eckbereichen 102 und 108 liegenden Endbereichen 164, 166 bzw. 168, 170.

Diese durch die Diagonalen 140 und 142 bestimmte maximale Abstützlänge A in einer Ebene E senkrecht zur Achse 54 des Schafts 38 ist wesentlich für die präzise und momentensteife Ausrichtung des Werkzeugs W parallel zur Spindelachse 14 und somit zur Z-Achse der Drehmaschine, da sich durch die derart große maximale Abstützlänge A Positionierfehler der Formschlußelemente 76, 78 bzw. 96, 98 nur in einem geringen Verhältnis in Positionierfehler des Werkzeugs W relativ zur Spindelachse 14 übersetzen und andererseits auf das Werkzeug W wirkende Drehmomente bezüglich einer Drehung des Werkzeughalters 34 um die Achse 54 des Schaftes 38 optimal mit großer Steifigkeit abgestützt werden können (Fig. 5, 6, 8).

Die zusammenwirkenden Formschlußelemente 76, 78 bzw. 96, 98 erlauben in einer zweiten Positionierrichtung 180, die quer zur ersten Positionierrichtung 120 verläuft, keine formschlüssige Festlegung sondern lassen in dieser Richtung einen Freiheitsgrad zu, so daß eine geringfügige Bewegung des Werkzeughalters 34, in der zweiten Positionierrichtung 180 möglich ist, die beim Einspannen des Schaftes 38 in der Aufnahme 40 durch ein auf eine Verzahnung 182 des Schaftes 38 einwirkende Gegenverzahnung 184 eines Einspannelementes der Aufnahme 40 aufgrund einer auf den Schaft 38 einwirkenden Querkraft 186 entsteht, welche parallel zu der Längsrichtung 80, 100 der Formschlußelemente 76, 78, 96, 98 wirkt und den Schaft 38 kraftbeaufschlagt gegen eine der Gegenverzahnung 184 gegenüberliegende Kontur 188 der Aufnahme 40 anlegt, so daß dadurch der Werkzeughalter 34 in der zweiten Positionierrichtung 180 relativ zum Revolverkopf 24 exakt positioniert wird.

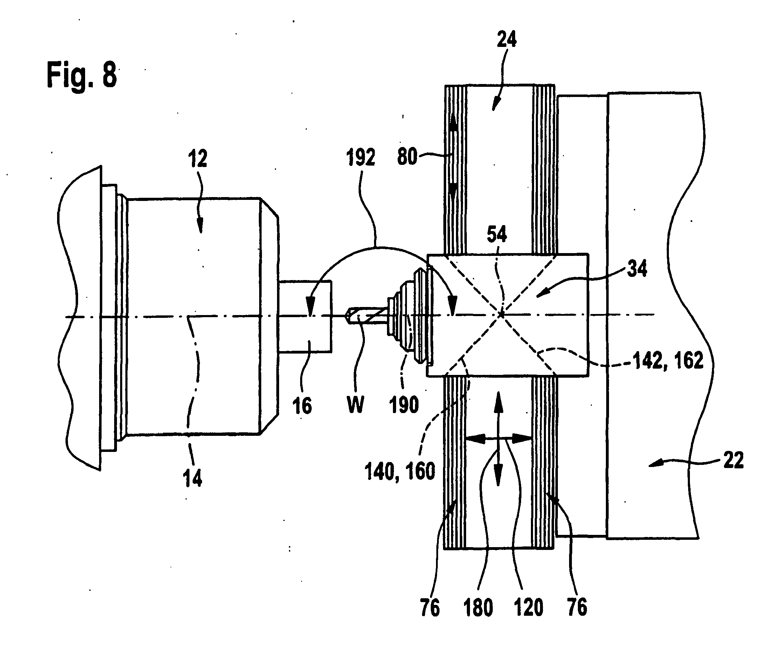

Die Bewegbarkeit der Formschlußelemente 76, 78, 96, 98 in der zweiten Positionierrichtung 180 beeinträchtigt - wie in Fig. 8 dargestellt - die Ausrichtung einer Werkzeugachse 190 des Werkzeugs W relativ zur Spindelachse 14 und somit zur Z-Richtung der Werkzeugmaschine nur insoweit als durch eine Bewegung in der zweiten Positionierrichtung 180 noch eine Parallelverschiebung gegenüber der Spindelachse 14 möglich ist. Der in einer Ebene senkrecht zur Achse 54 liegende Winkel 192 zwischen der Werkzeugachse 190 und der Spindelachse 14 ist jedoch ausschließlich durch die Formschlußelemente 76, 78, 96, 98 festgelegt (Fig. 8).

## Patentansprüche

1. Werkzeugmaschine umfassend einen Werkzeugträger (24) mit mindestens einer Werkzeugstation (28), welche eine Auflageseite (30) für eine Anlageseite (36) eines Werkzeughalters (34) und eine Aufnahme (40) für einen Schaft (38) des Werkzeughalters (34) aufweist, wobei die Anlageseite (36) dann gegen die Auflageseite (30) anliegt, wenn der Werkzeughalter (34) mit seinem Schaft (38) in der Aufnahme (40) eingespannt ist, und mindestens ein erstes Formschlusselement (76, 78), welches bei in der Aufnahme (40) eingespanntem Schaft (38) spielfrei in ein zweites Formschlusselement (96, 98) am Werkzeughalter (34) eingreift, um den Werkzeughalterkörper (32) relativ zum Werkzeugträger (24) präzise ausgerichtet zu fixieren,
**dadurch gekennzeichnet, dass** mindestens zwei auf einander gegenüberliegenden Seiten der Aufnahme (40) angeordnete erste Formschlusselemente (76, 78) vorgesehen und in einander gegenüberliegenden Außenbereichen (72, 74) in die abgeflachte Auflageseite (30) als Vertiefungen eingeformt sind, dass die ersten Formschlusselemente (76, 78) eine nur in einer ersten Positionierrichtung (120) die zweiten Formschlusselemente (96, 98) präzise positionierende Formschlussgeometrie (114) aufweisen, und dass die ersten Formschlusselemente (76, 78) eine in einer quer zur ersten (120) verlaufenden zweiten Positionierrichtung (180) die zweiten Formschlusselemente (96, 98) mit einem Freiheitsgrad verschieblich führende Formschlussgeometrie (114) aufweisen.

2. Werkzeugmaschine nach Anspruch 1, **dadurch gekennzeichnet, dass** die ersten Formschlusselemente (76, 78) in sich an Stirnseiten (62, 64) des Werkzeugträgers (24) anschließenden Außenbereichen (72, 74) der Auflageseite (30) angeordnet sind.

3. Werkzeugmaschine nach Anspruch 1 oder 2, **dadurch gekennzeichnet, dass** die ersten Formschlusselemente (76, 78) mindestens in einander gegenüberliegenden Eckbereichen (82, 88; 84, 86) der Auflageseite angeordnet sind.

4. Werkzeugmaschine nach einem der voranstehenden Ansprüche, **dadurch gekennzeichnet, dass** die ersten Formschlusselemente (76, 78) mindestens in Endbereichen (144, 146, 148, 150) einer Diagonalen (140, 142) der Auflageseite (30) angeordnet sind.

5. Werkzeugmaschine nach einem der voranstehenden Ansprüche, **dadurch gekennzeichnet, dass** die ersten Formschlusselemente (76, 78) symmetrisch zu der Aufnahme (40) angeordnet sind.

6. Werkzeugmaschine nach Anspruch 4 oder 5, **dadurch gekennzeichnet, dass** die ersten Formschlusselemente (76, 78) in Endbereichen (144, 146, 148, 150) beider Diagonalen (140, 142) der Auflageseite (30) angeordnet sind.

7. Werkzeugmaschine nach einem der voranstehenden Ansprüche, **dadurch gekennzeichnet, dass** die erste Positionierrichtung (120) quer zu einer auf den Schaft (38) beim Einspannen in die Aufnahme (40) wirkenden Querkraft (186) verläuft.

8. Werkzeugmaschine nach einem der voranstehenden Ansprüche, **dadurch gekennzeichnet, dass** die zweite Positionierrichtung (180) ungefähr parallel zu einer auf den Schaft (38) beim Einspannen in die Aufnahme (40) wirkenden Querkraft (186) verläuft.

9. Werkzeugmaschine nach einem der voranstehenden Ansprüche, **dadurch gekennzeichnet, dass** die ersten Formschlusselemente (76, 78) sich in einer Längsrichtung (80) erstrecken und in einer Ebene senkrecht zur Längsrichtung (80) eine konstante Querschnittsform (14) aufweisen.

10. Werkzeugmaschine nach Anspruch 9, **dadurch gekennzeichnet, dass** die Querschnittsform (14) der ersten Formschlusselemente (76, 78) zumindest zum Teil durch schräg zueinander verlaufende Flanken (14) gebildet ist.

11. Werkzeugmaschine nach Anspruch 9 oder 10, **dadurch gekennzeichnet, dass** die ersten Formschlusselemente (76, 78) sich mit ihrer Längsrichtung (80) ungefähr parallel zu einer auf den Schaft (38) beim Einspannen in der Aufnahme wirkenden Querkraft (186) erstrecken.

12. Werkzeugmaschine nach einem der voranstehenden Ansprüche, **dadurch gekennzeichnet, dass** die Formschlusselemente (76, 78, 96, 98) durch Einsetzen des Schafts (38) des Werkzeughalters (34) in die Aufnahme (40) in einer Einsetzrichtung (116) in Eingriff bringbar sind.

13. Werkzeugmaschine nach einem der voranstehenden Ansprüche, **dadurch gekennzeichnet, dass** die einen der Formschlusselemente (96, 98) als V-förmige Verzahnung und die anderen der Formschlusselemente (76, 78) als die Verzahnung aufnehmende V-Nut ausgebildet sind.

14. Werkzeugmaschine nach Anspruch 13, **dadurch gekennzeichnet, dass** die einen der Formschlusselemente (96, 98) als Mehrfachverzahnung und die anderen der Formschlusselemente (96, 98) als Mehrfachnut ausgebildet sind.

15. Werkzeughalter für eine Werkzeugmaschine, umfassend einen das Werkzeug (W) tragenden Werkzeughalterkörper (32), welcher eine Anlageseite (36) aufweist und einen von dieser abstehenden Schaft (38) zum Einspannen des Werkzeughalters (34) in einer Werkzeugstation (28) eines Werkzeugträgers (34) trägt, und ein zweites Formschlusselement (96, 98), welches bei in der Aufnahme (40) eingespanntem Schaft (38) spielfrei in ein erstes Formschlusselement (76, 78) des Werkzeugträgers (24) eingreift, um den Werkzeughalterkörper (32) relativ zum Werkzeugträger (24) präzise ausgerichtet zu fixieren, **dadurch gekennzeichnet, dass** mindestens auf zwei einander gegenüberliegenden Seiten des Schaftes (38) angeordnete zweite Formschlusselemente (96, 98) vorgesehen sind, dass die zweiten Formschlusselemente (96, 98) in einander gegenüberliegenden Außenbereichen (92, 94) der Anlageseite (36) angeordnet sind. und mit den als Vertiefungen in Außenbereichen (72, 74) der Auflageseite (30) angeordneten ersten Formschlusselementen (76, 78) in Eingriff bringbar sind, und dass die zweiten Formschlusselemente (96, 98) eine nur in einer ersten Positionierrichtung (120) die ersten Formschlusselemente (76, 78) präzise positionierende Formschlussgeometrie (118) aufweisen

16. Werkzeughalter nach Anspruch 15, **dadurch gekennzeichnet, dass** die zweiten Formschlusselemente (96, 98) mindestens in einander gegenüberliegenden Eckbereichen (102, 108; 104, 106) der Anlageseite (36) angeordnet sind.

17. Werkzeughalter nach Anspruch 15 oder 16, **dadurch gekennzeichnet, dass** die zweiten Formschlusselemente (96, 98) mindestens in einander gegenüberliegenden Endbereichen (164, 170; 166, 168) mindestens einer Diagonalen (160, 162) der Anlageseite (36) angeordnet sind.

18. Werkzeughalter nach einem der Ansprüche 15 bis 17, **dadurch gekennzeichnet, dass** die zweiten Formschlusselemente (96, 98) symmetrisch zu dem Schaft (38) angeordnet sind.

19. Werkzeughalter nach Anspruch 18, **dadurch gekennzeichnet, dass** die zweiten Formschlusselemente (96, 98) in Endbereichen (164, 170; 166, 168) beider Diagonalen (160, 162) der Anlageseite (36) angeordnet sind.

20. Werkzeughalter nach Anspruch 19, **dadurch gekennzeichnet, dass** die erste Positionierrichtung (120) quer zu einer auf den Schaft (38) beim Einspannen in die Aufnahme (40) wirkenden Querkraft (186) verläuft.

21. Werkzeughalter nach einem der Ansprüche 15 bis 20, **dadurch gekennzeichnet, dass** die zweiten Formschlusselemente (96, 98) eine in einer quer zur ersten (120) verlaufenden zweiten Positionierrichtung (180) die ersten Formschlusselemente (76, 78) mit einem Freiheitsgrad verschieblich führende Formschlussgeometrie (118) aufweisen.

22. Werkzeughalter nach Anspruch 21, **dadurch gekennzeichnet, dass** die zweite Positionierrichtung (180) ungefähr parallel zu einer auf den Schaft (38) beim Einspannen in die Aufnahme (40) wirkenden Querkraft (186) verläuft.

23. Werkzeughalter nach einem der Ansprüche 20 bis 22, **dadurch gekennzeichnet, dass** die zweiten Formschlusselemente (96, 98) sich in einer Längsrichtung (100) erstrecken und in einer Ebene senkrecht zur Längsrichtung (100) eine konstante Querschnittsform (118) aufweisen.

24. Werkzeughalter nach Anspruch 23, **dadurch gekennzeichnet, dass** die Querschnittsform (118) der zweiten Formschlusselemente (96, 98) zumindest zum Teil durch schräg zueinander verlaufende Flanken (118) gebildet ist.

25. Werkzeughalter nach einem der Ansprüche 15 bis 24, **dadurch gekennzeichnet, dass** die Formschlusselemente (96, 98) sich mit ihrer Längsrichtung (100) ungefähr parallel zu einer auf den Schaft (38) beim Einspannen in der Aufnahme (40) wirkenden Querkraft (186) erstrecken.

26. Werkzeughalter nach einem der Ansprüche 15 bis 25, **dadurch gekennzeichnet, dass** die zweiten Formschlusselemente (96, 98) an einer bei in der Aufnahme (40) eingespanntem Schaft (38) in Richtung des Werkzeugträgers (24) kraftbeaufschlagten Stützplatte (44) des Werkzeughalterkörpers (32) angeordnet sind.

27. Werkzeughalter nach Anspruch 26, **dadurch gekennzeichnet, dass** die Stützplatte (44) auf einer dem Werkzeugträger (24) zugewandten Seite eines den Schaft (38) tragenden Gehäuses (42) des Werkzeugträgers (34) angeordnet ist.

28. Werkzeughalter nach Anspruch 26 oder 27, **dadurch gekennzeichnet, dass** die zweiten Formschlusselemente (96, 98) einstückig an die Stützplatte angeformt sind.

29. Werkzeughalter nach einem der Ansprüche 15 bis 28, **dadurch gekennzeichnet, dass** die zweiten Formschlusselemente (96, 98) an dem Werkzeughalterkörper (32) justierbar angeordnet sind.

30. Werkzeughalter nach Anspruch 29, **dadurch gekennzeichnet, dass** die Stützplatte (44) gegenüber dem Gehäuse (42) des Werkzeughalterkörpers (32) justierbar und fixierbar ist.

31. Werkzeughalter nach einem der Ansprüche 15 bis 30, **dadurch gekennzeichnet, dass** die Formschlusselemente (76, 78, 96, 98) durch Einsetzen des Schafts (38) in die Aufnahme (40) in einer Einsetzrichtung (116) in Eingriff bringbar sind.

32. Werkzeughalter nach einem der Ansprüche 15 bis 31, **dadurch gekennzeichnet, dass** die einen der Formschlusselemente (96, 98) als V-förmige Verzahnung und die andere der Formschlusselemente (76, 78) als die Verzahnung aufnehmende V-Nut ausgebildet sind.

33. Werkzeughalter nach Anspruch 32, **dadurch gekennzeichnet, dass** die einen der Formschlusselemente (96, 98) als Mehrfachverzahnung und die anderen der Formschlusselemente (76, 78) als Mehrfachnut ausgebildet sind.

34. Werkzeugfixiereinrichtung für Werkzeugmaschinen, umfassend einen Werkzeughalter (34) mit einem das Werkzeug (W) tragenden Werkzeughalterkörper (32), welcher eine Anlageseite (36) aufweist und einen von dieser abstehenden Schaft (38) zum Einspannen des Werkzeughalters (34) trägt, einen Werkzeugträger (24) mit mindestens einer Werkzeugstation (28), umfassend eine Auflageseite (30) und eine Aufnahme (40) für den Schaft (38), wobei die Anlageseite (36) dann gegen die Auflageseite (30) anliegt, wenn der Werkzeughalter (34) mit seinem Schaft (38) in der Aufnahme (40) eingespannt ist, und mindestens eine zwischen Werkzeughalterkörper (32) und Werkzeugträger (24) wirkende Ausrichtvorrichtung (136, 138) zur Positionierung des Werkzeughalterkörpers (32) relativ zum Werkzeugträger (24), die bei in der Aufnahme (40) eingespanntem Schaft (38) mittels am Werkzeugträger (24) und am Werkzeughalterkörper (32) angeordneten und spielfrei ineinandergreifenden Formschlusselementen (76, 78, 96, 98) den Werkzeugträger und den Werkzeughalterkörper relativ zueinander in einer einzigen Stellung ausgerichtet fixiert, **dadurch gekennzeichnet, dass** mindestens zwei aufeinander gegenüberliegenden Seiten des in die Aufnahme (40) eingespannten Schaftes (38) angeordnete Ausrichtvorrichtungen (136, 138) mit in Außenbereichen (72, 74) der abgeflachten Auflageseite (30) als Vertiefungen eingeformten ersten Formschlusselementen (76, 78) und mit in diese ersten Formschlusselemente (76, 78) eingreifenden in Außenbereichen (92, 94) der Anlageseite (36) angeordneten zweiten Formschlusselementen (96, 98) vorgesehen sind, dass die Ausrichtvorrichtungen (136, 138) in einander gegenüberliegenden Außenbereichen (72, 74, 92, 94) der Auflageseite (30) und/oder der Anlageseite (36) eine wirksame spielfreie Verbindung zwischen dem Werkzeugträger (24) und dem Werkzeughalterkörper (32) herstellen, und dass die Ausrichtvorrichtungen (136, 138) eine exakte Ausrichtung des Werkzeughalters (34) gegenüber dem Werkzeugträger (24) nur in einer ersten Positionierrichtung (120) bewirken und einen Freiheitsgrad in einer quer zur ersten verlaufenden zweiten Positionierrichtung (180) zulassen.

35. Werkzeugfixiereinrichtung nach Anspruch 34, **dadurch gekennzeichnet, dass** die Ausrichtvorrichtungen (136, 138) eine Ausrichtung des Werkzeughalters (34) gegen eine Verdrehung um den in die Aufnahme (40) eingesetzten Schaft (38) bewirken.

36. Werkzeugfixiereinrichtung nach Anspruch 34 oder 35, **dadurch gekennzeichnet, dass** beim Einspannen des Schaftes (38) in die Aufnahme (40) entstehende, quer zum Schaft (38) wirkende Querkräfte (186) ungefähr parallel zur zweiten Positionierrichtung (180) verlaufen.

37. Werkzeugfixiereinrichtung nach einem der Ansprüche 34 bis 36, **dadurch gekennzeichnet, dass** die Ausrichteinrichtungen (136, 138) mindestens in einander gegenüberliegenden Eckbereichen (82, 88; 84, 86; 102, 108; 104, 106) der Auflageseite (30) und/oder der Anlageseite (36) angeordnet sind.

38. Werkzeugfixiereinrichtung nach einem der Ansprüche 34 bis 37, **dadurch gekennzeichnet, dass** die Ausrichteinrichtungen (136, 138) mindestens in einander gegenüberliegenden Endbereichen (144, 146; 148, 150; 164, 166; 168, 170) mindestens einer Diagonalen (140, 142; 160, 162) der Auflageseite (30) und/oder der Anlageseite (36) angeordnet sind.

## Claims

1. A machine tool comprising a tool carrier (24) having at least one tool station (28) which has a bearing face (30) for a contact face (36) of a tool holder (34) and a seating (40) for a shaft (38) of the tool holder (34), wherein the contact face (36) abuts against the bearing face (30) when the shaft (38) of the tool holder (34) is clamped in the seating (40), and at least one first interlocking element (76, 78) which engages without play in a second interlocking element (96, 98) on the tool holder (34) when the shaft (38) is clamped in the seating (40) in order to fix the tool holder body (32) relative to the tool carrier (24) in precise alignment, **characterized in that** there are provided at least two first interlocking elements (76, 78) which are arranged on mutually opposite sides of the seating (40) and are in the form of indentations that are formed in the flattened bearing face (30) in mutually opposite outer regions (72, 74) thereof, **in that** the interlocking geometry (114) of the first interlocking elements (76, 78) is such as to precisely position the second interlocking elements (96, 98) only in a first positioning direction (120), and **in that** the interlocking geometry (114) of the first interlocking elements (76, 78) is such as to guide the second interlocking elements (96, 98) with one degree of freedom in displaceable manner in a second positioning direction (180) that runs transversely with respect to the first positioning direction (120).

2. A machine tool in accordance with Claim 1, **characterized in that** the first interlocking elements (76, 78) are arranged in outer regions (72, 74) of the bearing face (30) adjoining end faces (62, 64) of the tool carrier (24).

3. Machine tool in accordance with Claim 1 or 2, **characterized in that** the first interlocking elements (76, 78) are arranged at least in mutually opposite corner areas (82, 88; 84, 86) of the bearing face.

4. A machine tool in accordance with any of the preceding Claims, **characterized in that** the first interlocking elements (76, 78) are arranged at least in end regions (144, 146, 148, 150) of a diagonal (140, 142) of the bearing face (30).

5. A machine tool in accordance with any of the preceding Claims, **characterized in that** the first interlocking elements (76, 78) are arranged symmetrically with respect to the seating (40).

6. A machine tool in accordance with Claim 4 or 5, **characterized in that** the first interlocking elements (76, 78) are arranged in end regions (144, 146, 148, 150) of both diagonals (140, 142) of the bearing face (30).

7. A machine tool in accordance with any of the preceding Claims, **characterized in that** the first positioning direction (120) runs transverse to a transverse force (186) acting on the shaft (38) during the process of clamping into the seating (40).

8. A machine tool in accordance with any of the preceding Claims, **characterized in that** the second positioning direction (180) runs approximately parallel to a transverse force (186) acting on the shaft (38) during the process of clamping into the seating (40).

9. A machine tool in accordance with any of the preceding Claims, **characterized in that** the first interlocking elements (76, 78) extend in a longitudinal direction (80) and have a constant cross-sectional shape (14) in a plane perpendicular to the longitudinal direction (80).

10. A machine tool in accordance with Claim 9, **characterized in that** the cross-sectional shape (14) of the first interlocking elements (76, 78) is formed at least in part by mutually inclined flanks (14).

11. A machine tool in accordance with Claim 9 or 10, **characterized in that**, in their longitudinal direction (80), the first interlocking elements (76, 78) extend approximately parallel to a transverse force (186) acting on the shaft (38) during the process of clamping into the seating.

12. A machine tool in accordance with any of the preceding Claims, **characterized in that** the interlocking elements (76, 78, 96, 98) are arranged to be brought into engagement by inserting the shaft (38) of the tool holder (34) into the seating (40) in an insertion direction (116).

13. A machine tool in accordance with any of the preceding Claims, **characterized in that** the elements of one of the interlocking elements (96, 98) are in the form of V-shaped teeth and the elements of the other interlocking elements (76, 78) are in the form of V-grooves which accommodate the teeth.

14. A machine tool in accordance with Claim 13, **characterized in that** the elements of one of the interlocking elements (96, 98) are in the form of multiple teeth and the elements of the other interlocking elements (96, 98) are in the form of multiple grooves.

15. A tool holder for a machine tool comprising a tool holder body (32) which carries the tool (W) and comprises a contact face (36) and carries a shaft (38) that projects from said face for clamping the tool holder (34) in a tool station (28) of a tool carrier (34), and a second interlocking element (96, 98) which engages without play in a first interlocking element (76, 78) of the tool carrier (24) when the shaft (38) is clamped in the seating (40) in order to fix the tool holder body (32) relative to the tool carrier (24) in precise alignment, **characterized in that** there are provided second interlocking elements (96, 98) which are arranged at least on two mutually opposite sides of the shaft (38), **in that** the second interlocking elements (96, 98) are arranged in mutually opposite outer regions (92, 94) of the contact face (36) and are arranged to be brought into engagement with the first interlocking elements (76, 78) that are in the form of indentations in outer regions (72, 74) of the bearing face (30), and **in that** the interlocking geometry (118) of the second interlocking elements (96, 98) is such as to precisely position the first interlocking elements (76, 78) only in a first positioning direction (120).

16. A tool holder in accordance with Claim 15, **characterized in that** the second interlocking elements (96, 98) are arranged at least in mutually opposite corner areas (102, 108; 104, 106) of the contact face (36).

17. A tool holder in accordance with Claim 15 or 16, **characterized in that** the second interlocking elements (96, 98) are arranged at least in mutually opposite end regions (164, 170; 166, 168) of at least one diagonal (160, 162) of the contact face (36.

18. A tool holder in accordance with any of the Claims 15 to 17, **characterized in that** the second interlocking elements (96, 98) are arranged symmetrically with respect to the shaft (38).

19. A tool holder in accordance with Claim 18, **characterized in that** the second interlocking elements (96, 98) are arranged in end regions (164, 170; 166, 168) of both diagonals (160, 162) of the contact face (36).

20. A tool holder in accordance with Claim 19, **characterized in that** the first positioning direction (120) runs transverse to a transverse force (186) acting on the shaft (38) during the process of clamping into the seating (40).

21. A tool holder in accordance with any of the Claims 15 to 20, **characterized in that** the interlocking geometry (118) of the second interlocking elements (96, 98) is such as to guide the first interlocking elements (76, 78) in displaceable manner with one degree of freedom in a second positioning direction (180) that runs transversely with respect to the first one (120).

22. A tool holder in accordance with Claim 21, **characterized in that** the second positioning direction (180) runs approximately parallel to a transverse force (186) acting on the shaft (38) during the process of clamping into the seating (40).

23. A tool holder in accordance with any of the Claims 20 to 22, **characterized in that** the second interlocking elements (96, 98) extend in a longitudinal direction (100) and have a constant cross-sectional shape (118) in a plane perpendicular to the longitudinal direction (100).

24. A tool holder in accordance with Claim 23, **characterized in that** the cross-sectional shape (118) of the second interlocking elements (96, 98) is formed at least in part by mutually inclined flanks (118).

25. A tool holder in accordance with any of the Claims 15 to 24, **characterized in that**, in their longitudinal direction (100), the interlocking elements (96, 98) extend approximately parallel to a transverse force (186) acting on the shaft (38) during the process of clamping into the seating (40).

26. A tool holder in accordance with any of the Claims 15 to 25, **characterized in that** the second interlocking elements (96, 98) are arranged on a support plate (44) of the tool holder body (32) that is subjected to a force in the direction of the tool carrier (24) when the shaft (38) is clamped in the seating (40).

27. A tool holder in accordance with Claim 26, **characterized in that** the support plate (44) is arranged on a side of a housing (42) of the tool carrier (34) carrying the shaft (38) which faces the tool carrier (24).

28. A tool holder in accordance with Claim 26 or 27, **characterized in that** the second interlocking elements (96, 98) are formed in one-piece manner on the support plate.

29. A tool holder in accordance with any of the Claims 15 to 28, **characterized in that** the second interlocking elements (96, 98) are arranged on the tool holder body (32) in adjustable manner.

30. A tool holder in accordance with Claim 29, **characterized in that** the support plate (44) is adjustable and fixable with respect to the housing (42) of the tool holder body (32).

31. A tool holder in accordance with any of the Claims 15 to 30, **characterized in that** the interlocking elements (76, 78, 96, 98) are arranged to be brought into engagement by inserting the shaft (38) into the seating (40) in an insertion direction (116).

32. A tool holder in accordance with any of the Claims 15 to 31, **characterized in that** the elements of one of the interlocking elements (96, 98) are in the form of V-shaped teeth and the elements of the other interlocking elements (76, 78) are in the form of V-grooves which accommodate the teeth.

33. A tool holder in accordance with Claim 32, **characterized in that** the elements of one of the interlocking elements (96, 98) are in the form of multiple teeth and the elements of the other interlocking elements (76, 78) are in the form of multiple grooves.

34. A tool fixing device for machine tools comprising a tool holder (34) having a tool holder body (32) which carries the tool (W) and comprises a contact face (36) and carries a shaft (38) which projects from said contact face for clamping the tool holder (34), a tool carrier (24) having at least one tool station (28), comprising a bearing face (30) and a seating (40) for the shaft (38), wherein the contact face (36) abuts against the bearing face (30) when the shaft (38) of the tool holder (34) is clamped in the seating (40), and at least one aligning device (136, 138) acting between the tool holder body (32) and the tool carrier (24) for positioning the tool holder body (32) relative to the tool carrier (24) and which, with the shaft (38) clamped in the seating (40), fixes the tool carrier and the tool holder body relative to each other in alignment in just one position by means of interlocking elements (76, 78, 96, 98) that are arranged on the tool carrier (24) and on the tool holder body (32) and inter-engage without play, **characterized in that** there are provided at least two aligning devices (136, 138) which are arranged on mutually opposite sides of the shaft (38) clamped into the seating (40) and which comprise first interlocking elements (76, 78) in the form of indentations formed in outer regions (72, 74) of the flattened bearing face (30) and second interlocking elements (96, 98) that are arranged in outer regions (92, 94) of the contact face (36) and inter-engage with these first interlocking elements (76, 78), **in that** the aligning devices (136, 138) establish an effective connection without play between the tool carrier (24) and the tool holder body (32) in mutually opposite outer regions (72, 74, 92, 94) of the bearing face (30) and/or the contact face (36), and **in that** the aligning devices (136, 138) produce exact alignment of the tool holder (34) with respect to the tool carrier (24) only in a first positioning direction (120) and permit one degree of freedom in a second positioning direction (180) running transverse to the first one.

35. A tool fixing device in accordance with Claim 34, **characterized in that** the aligning devices (136, 138) produce an alignment of the tool holder (34) countering a twist about the shaft (38) inserted into the seating (40).

36. A tool fixing device in accordance with Claim 34 or 35, **characterized in that** transverse forces (186) acting transversely to the shaft (38) when clamping the shaft (38) into the seating (40) run approximately parallel to the second positioning direction (180).

37. A tool fixing device in accordance with any of the Claims 34 to 36, **characterized in that** the aligning devices (136, 138) are arranged at least in mutually opposite corner areas (82, 88; 84, 86; 102, 108; 104, 106) of the bearing face (30) and/or the contact face (36).

38. A tool fixing device in accordance with any of the Claims 34 to 37, **characterized in that** the aligning devices (136, 138) are arranged at least in mutually opposite end regions (144, 146; 148, 150; 164, 166; 168, 170) of at least one diagonal (140, 142; 160, 162) of the bearing face (30) and/or the contact face (36).

## Revendications

1. Machine-outil comprenant un porte-outil (24) avec au moins un poste d'outil (28) qui présente un côté d'appui (30) pour un côté d'application (36) d'un dispositif porte-outil (34) et un logement (40) pour une tige (38) du dispositif porte-outil (34), sachant que le côté d'application (36) repose contre le côté d'appui (30), si le dispositif porte-outil (34) est serré avec sa tige (38) dans le logement (40), et au moins un premier élément de verrouillage par forme (76, 78) qui s'engage sans jeu dans un second élément de verrouillage par forme (96, 98) sur le dispositif porte-outil (34) lorsque la tige (38) est serrée dans le logement (40) afin de fixer en orientation précise le corps de dispositif porte-outil (32) par rapport au porte-outil (24), **caractérisée en ce qu'**au moins deux premiers éléments de verrouillage par forme (76, 78) disposés sur des côtés opposés du logement (40) sont prévus et sont moulés dans des zones extérieures (72, 74) opposées dans le côté d'appui aplati (30) comme des cavités, **en ce que** les premiers éléments de verrouillage par forme (76, 78) présentent une géométrie de verrouillage par forme (114) ne positionnant précisément que dans un premier sens de positionnement (120) les seconds éléments de verrouillage par forme (96, 98), et **en ce que** les premiers éléments de verrouillage par forme (76, 78) présentent une géométrie de verrouillage par forme (114) guidant de manière mobile les seconds éléments de verrouillage par forme (96, 98) avec un degré de liberté dans un second sens de positionnement (180) s'étendant transversalement au premier (120).

2. Machine-outil selon la revendication 1, **caractérisée en ce que** les premiers éléments de verrouillage par forme (76, 78) sont disposés dans des zones extérieures (72, 74), contiguës aux côtés frontaux (62, 64) du porte-outil (24), du côté d'appui (30).

3. Machine-outil selon la revendication 1 ou 2, **caractérisée en ce que** les premiers éléments de verrouillage par forme (76, 78) sont disposés au moins dans des zones d'angle (82, 88 ; 84, 86) opposées du côté d'appui.

4. Machine-outil selon l'une quelconque des revendications précédentes, **caractérisée en ce que** les premiers éléments de verrouillage par forme (76, 78) sont disposés au moins dans des zones d'extrémité (144, 146, 148, 150) d'une diagonale (140, 142) du côté d'appui (30).

5. Machine-outil selon l'une quelconque des revendications précédentes, **caractérisée en ce que** les premiers éléments de verrouillage par forme (76, 78) sont disposés de manière symétrique par rapport au logement (40).

6. Machine-outil selon la revendication 4 ou 5, **caractérisée en ce que** les premiers éléments de verrouillage par forme (76, 78) sont disposés dans des zones d'extrémité (144, 146, 148, 150) de deux diagonales (140, 142) du côté d'appui (30),

7. Machine-outil selon l'une quelconque des revendications précédentes, **caractérisée en ce que** le premier sens de positionnement (120) s'étend transversalement à une force transversale (186) agissant sur la tige (38) lors du serrage dans le logement (40).

8. Machine-outil selon l'une quelconque des revendications précédentes, **caractérisée en ce que** le sens de positionnement (180) s'étend à peu près parallèlement à une force transversale (186) agissant sur la tige (38) lors du serrage dans le logement (40).

9. Machine-outil selon l'une quelconque des revendications précédentes, **caractérisée en ce que** les premiers éléments de verrouillage par forme (76, 78) s'étendent dans un sens longitudinal (80) et présentent une forme de section transversale (14) constante dans un plan perpendiculairement au sens longitudinal (80).

10. Machine-outil selon la revendication 9, **caractérisée en ce que** la section transversale (14) des premiers éléments de verrouillage par forme (76, 78) est formée au moins en partie par des flancs (14) s'étendant en biais les uns par rapport aux autres.

11. Machine-outil selon la revendication 9 ou 10, **caractérisée en ce que** le sens longitudinal (80) des premiers éléments de verrouillage par forme (76, 78) s'étend à peu près parallèlement à une force transversale (186) agissant sur la tige (38) lors du serrage dans le logement.

12. Machine-outil selon l'une quelconque des revendications précédentes, **caractérisée en ce que** les éléments de verrouillage par forme (76, 78, 96, 98) peuvent être amenés en engagement par insertion de la tige (38) du dispositif porte-outil (34) dans le logement (40) dans un sens d'insertion (116).

13. Machine-outil selon l'une quelconque des revendications précédentes, **caractérisée en ce que** certains des éléments de verrouillage par forme (96, 98) sont réalisés comme une denture en V et les autres des éléments de verrouillage par forme (76, 78) sont réalisés comme une rainure en V recevant la denture.

14. Machine-outil selon la revendication 13, **caractérisée en ce que** certains des éléments de verrouillage par forme (96, 98) sont réalisés comme une denture multiple et les autres des éléments de verrouillage par forme (96, 98) sont réalisés comme une rainure multiple,

15. Dispositif porte-outil pour une machine-outil comprenant un corps de dispositif porte-outil (32) portant l'outil (W) qui présente un côté d'application (36) et une tige (38) s'éloignant de celui-ci pour le serrage du dispositif porte-outil (34) dans un poste d'outil (28) d'un porte-outil (34), et un second élément de verrouillage par forme (96, 98) qui s'engage sans jeu dans un premier élément de verrouillage par forme (76, 78) du porte-outil (24) lorsque la tige (38) est serrée dans le logement (40) afin de fixer en orientation précise le corps de dispositif porte-outil (32) par rapport au porte-outil (24), **caractérisé en ce qu'**au moins des seconds éléments de verrouillage par forme (96, 98) disposés sur deux côtés opposés de la tige (38) sont prévus, **en ce que** les seconds éléments de verrouillage par forme (96, 98) sont disposés dans des zones extérieures (92, 94) opposées du côté d'application (36), et peuvent être amenés en engagement avec les premiers éléments de verrouillage par forme (76, 78) disposés comme des cavités dans des zones extérieures (72, 74) du côté d'appui (30), et **en ce que** les seconds éléments de verrouillage par forme (96, 98) présentent une géométrie de verrouillage par forme (118) ne positionnant précisément que dans un premier sens de positionnement (120) les premiers éléments de verrouillage par forme (76, 78).

16. Dispositif porte-outil selon la revendication 15, **caractérisé en ce que** les seconds éléments de verrouillage par forme (96, 98) sont disposés au moins dans des zones d'angle opposées (102, 108 ; 104, 106) du côté d'application (36).

17. Dispositif porte-outil selon la revendication 15 ou 16, **caractérisé en ce que** les seconds éléments de verrouillage par forme (96, 98) sont disposés au moins dans des zones d'extrémité (164, 170 ; 166, 168) opposées au moins d'une diagonale (160, 162) du côté d'application (36).

18. Dispositif porte-outil selon l'une quelconque des revendications 15 à 17, **caractérisé en ce que** les seconds éléments de verrouillage par forme (96, 98) sont disposés de manière symétrique par rapport à la tige (38).

19. Dispositif porte-outil selon la revendication 18, **caractérisé en ce que** les seconds éléments de verrouillage par forme (96, 98) sont disposés dans des zones d'extrémité (164, 170 ; 166, 168) de deux diagonales (160, 162) du côté d'application (36).

20. Dispositif porte-outil selon la revendication 19, **caractérisé en ce que** le premier sens de positionnement (120) s'étend transversalement à une force transversale (186) agissant sur la tige (38) lors du serrage dans le logement (40).

21. Dispositif porte-outil selon l'une quelconque des revendications 15 à 20, **caractérisé en ce que** les seconds éléments de verrouillage par forme (96, 98) présentent une géométrie de verrouillage par forme (118) guidant de manière mobile les premiers éléments de verrouillage par forme (76, 78) avec un degré de liberté dans un second sens de positionnement (180) s'étendant transversalement au premier (120).

22. Dispositif porte-outil selon la revendication 21, **caractérisé en ce que** le second sens de positionnement (180) s'étend à peu près parallèlement à une force transversale (186) agissant sur la tige (38) lors du serrage dans le logement (40).

23. Dispositif porte-outil selon l'une quelconque des revendications 15 à 22, **caractérisé en ce que** les seconds éléments de verrouillage par forme (96, 98) s'étendent dans un sens longitudinal (100) et présentent dans un plan perpendiculairement au sens longitudinal (100) une forme de section transversale (118) constante.

24. Dispositif porte-outil selon la revendication 23, **caractérisé en ce que** la section transversale (118) des seconds éléments de verrouillage par forme (96, 98) est formée au moins en partie par des flancs (118) s'étendant en biais les uns par rapport aux autres.

25. Dispositif porte-outil selon l'une quelconque des revendications 15 à 24, **caractérisé en ce que** le sens longitudinal (100) des éléments de verrouillage par forme (96, 98) s'étend à peu près parallèlement à une force transversale (186) agissant sur la tige (38) lors du serrage dans le logement (40).

26. Dispositif porte-outil selon l'une quelconque des revendications 15 à 25, **caractérisé en ce que** les seconds éléments de verrouillage par forme (96, 98) sont disposés sur une plaque d'appui (44) du corps de dispositif porte-outil (32) sollicitée par une force lorsque la tige (38) est serrée dans le logement (40) en direction du porte-outil (24).

27. Dispositif porte-outil selon la revendication 26, **caractérisé en ce que** la plaque d'appui (44) est disposée sur un côté tourné vers le porte-outil (24) d'un boîtier (42) portant la tige (38) du porte-outil (34).

28. Dispositif porte-outil selon la revendication 26 ou 27, **caractérisé en ce que** les seconds éléments de verrouillage par forme (96, 98) sont formés d'un seul tenant sur la plaque d'appui.

29. Dispositif porte-outil selon l'une quelconque des revendications 15 à 28, **caractérisé en ce que** les seconds éléments de verrouillage par forme (96, 98) sont disposés de manière à pouvoir être ajustés sur le corps de dispositif porte-outil (32).

30. Dispositif porte-outil selon la revendication 29, **caractérisé en ce que** la plaque d'appui (44) peut être ajustée et fixée par rapport au boîtier (42) du corps de dispositif porte-outil (32).

31. Dispositif porte-outil selon l'une quelconque des revendications 15 à 30, **caractérisé en ce que** les éléments de verrouillage par forme (76, 78, 96, 98) peuvent être amenés en engagement par insertion de la tige (38) dans le logement (40) dans un sens d'insertion (116).

32. Dispositif porte-outil selon l'une quelconque des revendications 15 à 31, **caractérisé en ce que** certains des éléments de verrouillage par forme (96, 98) sont réalisés comme une denture en V et les autres des éléments de verrouillage par forme (76, 78) sont réalisés comme une rainure en V recevant la denture.

33. Dispositif porte-outil selon la revendication 32, **caractérisé en ce que** certains des éléments de verrouillage par forme (96, 98) sont réalisés comme une denture multiple et les autres des éléments de verrouillage par forme (76, 78) sont réalisés comme une rainure multiple.

34. Dispositif de fixation d'outil pour des machines-outils, comprenant un dispositif porte-outil (34) avec un corps de dispositif porte-outil (32) portant l'outil (W), qui présente un côté d'application (36) et porte une tige s'éloignant de celui-ci (38) pour le serrage du dispositif porte-outil (34), un porte-outil (24) avec au moins un poste d'outil (28), comprenant un côté d'appui (30) et un logement (40) pour la tige (38), sachant que le côté d'application (36) repose contre le côté d'appui (30) si le dispositif porte-outil (34) est serré avec sa tige (38) dans le logement (40), et au moins un dispositif d'orientation (136, 138) agissant entre le corps de dispositif porte-outil (32) et le porte-outil (24) pour le positionnement du corps de dispositif porte-outil (32) par rapport au porte-outil (24) qui fixe en orientation le porte-outil et le corps de dispositif porte-outil l'un par rapport à l'autre dans une seule position lorsque la tige (38) est serrée dans le logement (40) à l'aide d'éléments de verrouillage par forme (76, 78, 96, 98) s'engageant les uns dans les autres sans jeu et disposés sur le porte-outil (24) et le corps de dispositif porte-outil (32), **caractérisé en ce qu'**au moins des dispositifs d'orientation (136, 138) disposés sur deux côtés opposés de la tige (38) serrée dans le logement (40) avec des premiers éléments de verrouillage par forme (76, 78) formés dans des zones extérieures (72, 74) du côté d'appui (30) aplati comme des cavités et des seconds éléments de verrouillage par forme (96, 98) disposés dans des zones extérieures (92, 94) du côté d'application (36) s'engageant dans ces premiers éléments de verrouillage par forme (76, 78) sont prévus, **en ce que** les dispositifs d'orientation (136, 138) établissent dans des zones extérieures (72, 74, 92, 94) opposées du côté d'appui (30) et/ou du côté d'application (36) une liaison sans jeu efficace entre le porte-outil (24) et le corps de dispositif porte-outil (32), et **en ce que** les dispositifs d'orientation (136, 138) provoquent une orientation exacte du dispositif porte-outil (34) par rapport au porte-outil (24) seulement dans un premier sens de positionnement (120) et permettent un degré de liberté dans un second sens de positionnement (180) s'étendant transversalement au premier.

35. Dispositif de fixation d'outil selon la fixation 34, **caractérisé en ce que** les dispositifs d'orientation (136, 138) provoquent une orientation du dispositif porte-outil (34) contre une rotation autour de la tige (38) insérée dans le logement (40).

36. Dispositif de fixation d'outil selon la revendication 34 ou 35, **caractérisé en ce que** des forces transversales (186) agissant transversalement à la tige (38), apparues lors du serrage de la tige (38) dans le logement (40) s'étendent à peu près parallèlement au second sens de positionnement (180).

37. Dispositif de fixation d'outil selon l'une quelconque des revendications 34 à 36, **caractérisé en ce que** les dispositifs d'orientation (136, 138) sont disposés au moins dans des zones d'angle (82, 88 ; 84, 86 ; 102, 108 ; 104, 106) opposées du côté d'appui (30) et/ou du côté d'application (36).

38. Dispositif de fixation d'outil selon l'une quelconque des revendications 34 à 37, **caractérisé en ce que** les dispositifs d'orientation (136, 138) sont disposés au moins dans des zones d'extrémité (144, 146 ; 148, 150 ; 164, 166 ; 168, 170) opposées au moins d'une diagonale (140, 142 ; 160, 162) du côté d'appui (30) et/ou du côté d'application (36).
